(19) Europäisches Patentamt
European Patent Office
Office européen des brevets

(11) Veröffentlichungsnummer: **0 445 620 B1**


# (12) EUROPÄISCHE PATENTSCHRIFT


(45) Veröffentlichungstag der Patentschrift: **05.07.95**

(21) Anmeldenummer: **91102742.3**

(22) Anmeldetag: **25.02.91**

(51) Int. Cl.6: **F16F 1/36**, F16F 3/08, B29D 31/00, B29C 70/00, F16F 1/18


## (54) Blattfedern aus Faser/Kunststoff-Verbund.


(30) Priorität: **08.03.90 DE 4007346**

(43) Veröffentlichungstag der Anmeldung:
**11.09.91 Patentblatt 91/37**

(45) Bekanntmachung des Hinweises auf die Patenterteilung:
**05.07.95 Patentblatt 95/27**

(84) Benannte Vertragsstaaten:
**AT DE FR GB IT**

(56) Entgegenhaltungen:
**EP-A- 0 084 101**
**EP-A- 0 106 249**
**EP-A- 0 156 148**
**EP-A- 0 242 512**
**EP-A- 0 327 142**
**US-A- 3 698 702**



(73) Patentinhaber: **BASF Aktiengesellschaft**
**Carl-Bosch-Strasse 38**
**D-67063 Ludwigshafen (DE)**

(72) Erfinder: **Schuermann, Helmut**
**Burgunderstrasse 13**
**W-6701 Maxdorf (DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).





Rank Xerox (UK) Business Services
(3.10/3.09/3.3.3)

## Beschreibung

Blattfedern werden in zunehmendem Maße aus Faser/Kunststoff-Verbundmaterial hergestellt, wobei in eine Kunststoffmatrix in Längsrichtung ausgerichtete, unidirektionale Verstärkungsfasern eingelagert sind. Unter Belastung treten bei einer Blattfeder über den Querschnitt verschiedenartige Spannungen auf. Auf der einen Seite, bei gekrümmten Federn ist es die konkave Seite, sind es Zugspannungen, auf der gegenüberliegenden, konvexen Seite sind es vorwiegend Druckspannungen. In der Mitte des Querschnitts wird die Blattfeder hauptsächlich auf Schub beansprucht. Ein Versagen, insbesondere bei dynamischer Beanspruchung geht fast immer von der Matrix oder der Grenzfläche Faser/Matrix aus.

Der Erfindung lag nun die Aufgabe zugrunde, bei Blattfedern aus einem Faser/Kunststoff-Verbund die Belastbarkeit zu steigern.

Der Lösung dieser Aufgabe liegt nun die Erkenntnis zugrunde, daß man bei Verwendung einer der üblichen duroplastischen Matrixharze allein den verschiedenartigen Beanspruchungen nicht gleichzeitig voll gerecht werden kann, daß dies aber möglich ist, wenn man die Blattfeder aus mehreren Schichten aufbaut.

Gegenstand der Erfindung sind demzufolge Blattfedern, bestehend aus einer Kunststoffmatrix und in Längsrichtung ausgerichteten Verstärkungsfasern, mit mindestens zwei im wesentlichen parallel zur Oberfläche der Feder verlaufenden Schichten, wobei die einzelnen Schichten jeweils aus Kunststoffmatrix und Verstärkungsfasern bestehen, in den verschiedenen Schichten die Kunststoffmatrix aus verschiedenartigen, jedoch miteinander verträglichen Kunststoffen gebildet ist, und die Kunststoffmatrix in der Schicht auf der durch Druckkräfte beanspruchten Seite einen höheren Elastizitätsmodul aufweist als die Kunststoffmatrix in der Schicht auf der durch Zugkräfte beanspruchten Seite.

Derartige Blattfedern haben den Vorteil, daß sie im Vergleich zu herkömmlichen Federn aus Faser/Kunststoff-Verbund stärker dynamisch belastet werden können, und daß gezielt eine erhöhte Widerstandsfähigkeit gegen Temperatur- und Feuchtigkeitseinflüsse eingestellt werden kann. Darüber hinaus können Kosteneinsparungen dadurch erreicht werden, daß man in geringer belasteten Bereichen kostengünstigere Matrixsysteme einsetzt.

Die EP-A 84 101 beschreibt Blattfedern aus mehreren gleichartigen Laminatschichten, die durch Klebeschichten miteinander verbunden sind. Sie können auch Dämpfungsschichten aus gummielastischem Material enthalten, die aber nichts zur Belastbarkeit der Federn beitragen.

Der Aufbau und die Herstellung von Blattfedern aus Faser/Kunststoff-Verbund sind bekannt. Als Verstärkungsfasern werden die üblichen Glas-, Kohlenstoff- oder Aramid-Fasern verwendet. Der Fasergehalt liegt üblicherweise zwischen 40 und 65 Vol.-%, die Dicke der Federn kann in weiten

Grenzen zwischen 20 und 100 mm schwanken, wobei sie in der Mitte im allgemeinen dicker sind als am vorderen und hinteren Ende. Die Federn können gerade sein oder gewölbt.

Die Herstellung von Prepregs für die Blattfedern erfolgt durch Tränken von Faserlagen mit den Kunststoffen in Form einer Schmelze, einer Lösung oder von Pulver und anschließendem Verformen der Prepregs durch Pressen, wobei bei duroplastischen Harzen diese gleichzeitig ausgehärtet werden. Bei thermoplastischen Kunststoffen können diese auch in Form von Fasern mit den Verstärkungsfasern vermischt werden, worauf das so hergestellte Hybridgarn verpreßt wird.

Die erfindungsgemäßen Blattfedern bestehen aus mehreren Schichten mit verschiedenartigen Kunststoffmatrices, vorzugsweise aus zwei Schichten.

Dabei soll die Kunststoffmatrix in der äußeren Schicht auf der durch Druckkräfte beanspruchten Seite (bei gekrümmten Federn ist das die konvexe Oberfläche) einen relativ hohen Elastizitätsmodul (nach DIN EN 61) aufweisen. Vorzugsweise sollte der Elastizitätsmodul oberhalb von E = 3000 $N/mm^2$, insbesondere oberhalb von E = 3500 $N/mm^2$, liegen. Wichtig ist, daß die hohe Druckfestigkeit auch nach Lagerung in feucht/heißem Klima erhalten bleibt. Der Schubmodul (nach DIN 53 445) der Kunststoffmatrix, gemessen im Torsionsschwingungsversuch bei 70 °C und einer relativen Feuchtigkeit von 95 %, sollte oberhalb von 1000 $N \cdot mm^{-2}$, insbesondere oberhalb von 1150 $N \cdot mm^{-2}$, liegen. Als Kunststoffe kommen hier insbesondere duroplastische Harze in Frage, vorzugsweise Epoxidharze, Vinylesterharze und Bismaleinimidharze. Diese Schicht macht vorzugsweise 20 bis 80 % des Gesamtvolumens der Blattfeder aus.

Die Kunststoffmatrix in der äußeren Schicht auf der durch Zugkräfte beanspruchten Seite der Feder (bei gekrümmten Federn ist das die konvexe Oberfläche) soll eine relativ hohe Zähigkeit aufweisen. Die Bruchenergie (nach ASTM E 399-78a) der Kunststoffmatrix liegt vorzugsweise oberhalb von $C_{IC}$ = 150 $J \cdot m^{-2}$, insbesondere oberhalb von $C_{IC}$ = 200 $J \cdot m^{-2}$. Ihr Elastizitätsmodul ist grundsätzlich niedriger als der der Kunststoffmatrix in der Schicht auf der gegenüberliegenden Seite. Hier kommen wieder die gleichen Duroplastharze in Frage, die aber vorzugsweise durch Kautschuke (z.B. Acrylnitril/Butadien-, Butadien/Styrol- oder Acrylat-Kautschuke) oder durch Thermoplast-Zusätze (z.B. Polysulfone, Polyolefine, Polyimide oder Polyamide) modifiziert sind. Bei Epoxidharzen ist es auch möglich, die Zähigkeit durch Wahl geeigneter, z.B. längerkettiger difunktioneller Epoxide oder Härtersysteme zu erhöhen. Darüber hinaus können hier auch Thermoplasten, wie z.B. Polysulfone, Polyketone, Polycarbonate, Polyarylensulfide oder Polyamide verwendet werden.

Falls eine mittlere Schicht vorgesehen ist, wird hier als Kunststoffmatrix ein Harz mit hoher Schubfestigkeit, guter Bruchzähigkeit und hoher Energiefreisetzungsrate bei Schubbeanspruchung verwendet. In Frage kommen dazu beispielsweise kautschukmodifizierte härtbare Harze, wie sie üblicherweise bei Klebstoff-Formulierungen angewandt werden.

Das Verbinden der einzelnen Schichten geschieht dadurch, daß man erst Prepregs aus Verstärkungsfasern und den verschiedenen Kunststoffmatrices herstellt, diese Prepregs, gegebenenfalls mit Klebefilmen, übereinanderdrapiert und anschließend verpreßt.

## Patentansprüche

1. Blattfedern, bestehend aus einer Kunststoffmatrix und in Längsrichtung ausgerichteten Verstärkungsfasern, mit mindestens zwei im wesentlichen parallel zur Oberfläche der Feder verlaufenen Schichten, dadurch gekennzeichnet, daß die einzelnen Schichten jeweils aus Kunststoffmatrix und Verstärkungsfasern bestehen, wobei in den verschiedenen Schichten die Kunststoffmatrix aus verschiedenartigen, jedoch miteinander verträglichen Kunststoffen gebildet ist, und daß die Kunststoffmatrix in der Schicht auf der durch Druckkräfte beanspruchten Seite einen höheren Elastizitätsmodul aufweist als die Kunststoffmatrix in der Schicht auf der durch Zugkräfte beanspruchten Seite.

2. Blattfedern nach Anspruch 1, dadurch gekennzeichnet, daß die Kunststoffmatrix aus Duroplasten, vorzugsweise ausgehärteten Epoxidharzen, Bismaleinimidharze oder Vinylesterharzen besteht.

3. Blattfedern nach Anspruch 3, dadurch gekennzeichnet, daß in der Schicht auf der durch Zugkräfte beanspruchten Seite die Kunststoffmatrix ein durch Kautschuk oder einen Thermoplasten modifizierter duroplastischer Kunststoff ist.

4. Blattfedern nach Anspruch 1, dadurch gekennzeichnet, daß in der Schicht auf der durch Druckkräfte beanspruchten Seite die Kunststoffmatrix ein Duroplast ist, und in der Schicht auf der durch Zugkräfte beanspruchten Seite die Kunststoffmatrix ein Thermoplast ist.

5. Verfahren zur Herstellung der Blattfedern nach Anspruch 1, dadurch gekennzeichnet, daß Prepregs aus den Verstärkungsfasern und der jeweiligen Kunststoffmatrix gebildet werden, die Prepregs aufeinandergelegt, verpreßt und die Kunststoffe gegebenenfalls gehärtet werden.

## Claims

1. Leaf springs consisting of a plastic matrix and longitudinally aligned reinforcing fibers, with at least two layers extending essentially parallel to the surface of the spring, characterized in that the individual layers each consist of plastic matrix and reinforcing fibers, the plastic matrix in the various layers being formed of different but mutually compatible plastics, and in that the plastic matrix in the layer on the side stressed by forces of compression has a higher modulus of elasticity than the plastic matrix in the layer on the side stressed by forces of tension.

2. Leaf springs as claimed in claim 1, characterized in that the plastic matrix consists of thermoset plastics, preferably fully cured epoxy resins, bismaleimide resins or vinyl ester resins.

3. Leaf springs as claimed in claim 3, characterized in that the plastic matrix in the layer on the side stressed by forces of tension is a thermoset plastic modified by rubber or a thermoplastic.

4. Leaf springs as claimed in claim 1, characterized in that the plastic matrix in the layer on the side stressed by forces of compression is a thermoset and the plastic matrix in the layer on the side stressed by forces of tension is a thermoplastic.

5. A process for producing the leaf springs of claim 1, characterized in that prepregs are formed from the reinforcing fibers and the respective plastic matrix, the prepregs are superposed, pressed together and the plastics if necessary cured.

## Revendications

1. Ressort-lame constitué d'une matrice de matière plastique et de fibres de renforcement orientées en direction longitudinale, à au moins deux couches qui s'étendent sensiblement parallèlement à la surface du ressort, caractérisé par le fait que chacune des couches est constituée d'une matrice de matière plastique et de fibres de renforcement, la matrice de matière plastique étant formée dans les différentes couches de matières plastiques différentes mais compatibles les unes avec les autres et que la matrice de matière plastique dans la couche sur le côté soumis aux forces de pression possède un module d'élasticité plus élevé que la matrice de matière plastique dans la couche sur le côté soumis aux forces de traction.

**2.** Ressort-lame selon la revendication 1, caractérisé par le fait que la matrice de matière plastique est constituée de duroplastes de préférence de résines époxy, résines bismaléinimides ou résines vinylesters durcies.

**3.** Ressort-lame selon la revendication 3, caractérisé par le fait que, dans la couche sur le côté soumis aux forces de traction, la matrice de matière plastique est une matière plastique duroplastique modifiée par du caoutchouc ou un thermoplaste.

**4.** Ressort-lame selon la revendication 4, caractérisé par le fait que, dans la couche sur le côté soumis aux forces de pression, la matrice de matière plastique est un duroplaste et, dans la couche sur le côté soumis aux forces de traction, la matrice de matière plastique est un thermoplaste.

**5.** Procédé de fabrication du ressort-lame selon la revendication 1, caractérisé par le fait que l'on forme des pré-imprégnés des fibres de renforcement et de la matrice de matière plastique, on applique la pré-imprégné les uns sur les autres, on les presse et on durcit éventuellement la matière plastique.